# EUROPEAN PATENT SPECIFICATION

(11) **EP 1 503 478 B1**
(45) Date of publication and mention of the grant of the patent: **31.03.2010**
(21) Application number: 04254526.9
(22) Date of filing: 28.07.2004
(51) Int. Cl.: H02K 1/27

(54) **A rotor disc for an electrical machine, and retaining means**
Rotorscheibe für eine elektrische Maschine und Haltemittel
Disque de rotor d'une machine électrique et moyens de retenue

(30) Priority: 28.07.2003 GB 0317633
(43) Date of publication of application: 02.02.2005
(73) Proprietor: Cummins Generator Technologies Limited, Stamford Lincolnshire PE9 2NB (GB)
(72) Inventor: Al-Khayat, Nazar, Oakham Rutland LE15 6NF (GB); Allen, Stephen Frederick, Stamford Lincolnshire PE9 1DJ (GB); Mills, Cleveland, Bourne Lincolnshire PE10 OLL (GB); Dowdall, Jeremy Owen, Oakham Rutland LE15 6NT (GB); Maddison, Christopher Paul, Deeping St. James Lincolnshire PE6 8EN (GB); Nicolas, Martin, Stamford Lincolnshire PE9 2RN (GB)
(74) Representative: Williams, Michael Ian

(56) References cited:
- WO-A-02/056443
- US-A- 3 320 453
- US-A- 4 864 175
- US-A- 5 831 365

## Description

This invention relates to a rotor disc for an electrical machine and to retaining means for such a rotor disc. This invention also relates to retaining means for a rotor disc for an electrical machine.

The document US 5,831,365 relates to a detachable magnet carrier for a permanent magnet motor. A permanent magnet is placed in a container which then receives a cover, and a rotor has recesses which have a size and shape complementary to the size and shape of the magnet carrier assembly. By providing the magnet carrier assembly with a key which is received in a mating groove in a rotor surface, electromagnetic force is transferred to the rotor.

Document US 3,320,453 relates to an axial air gap dynamo electric machine with a disc rotor. An annular body of ceramic magnet material is supported by a casing wall against centrifugal force produced upon rotation of the structure.

Document US 4,864,175 relates to a rotor for an electric motor. A supporting disc has window-like openings corresponding to the contour of flat magnets. Flat magnets are seated between the supporting discs to secure them against the effects of centrifugal forces.

International publication WO 02/056443 discloses a rotor disc for an AC electrical machine having magnetisable members fixed against a surface thereof in a circumferential series. The members are fixed against the surface by way of a spider that is attached to the surface and that has arms that are arranged to abut the members when the spider is so attached The spider is arranged such that each arm projects radially between a respective juxtaposed pair of the members. Each arm is shaped so as to be wedge-shaped, the narrower part of the wedge being adjacent the surface and the wider part of the wedge being away from the surface. The members are also wedge-shaped, but taper in the opposite direction to that of the spider arms so as to form cooperating wedges with the arms when the spider is in abutment against the members. This results in the members being retained in position on the surface of the disc both tangentially and radially.

Although the arrangement disclosed in WO 02/056443 is advantageous in retaining some sizes of magnets in position during operation, it has been found that this arrangement is not adequate for retaining larger magnets that may be used on larger electrical machines. In such circumstances, it has been found that such larger magnets tend to come away from the surface of the disc against which it is intended they be held by the spider.

It is an object of this invention to address this problem.

According to one aspect of the invention, there is provided a rotor disc for an electrical machine, the rotor disc including a series of magnetisable members arranged in a circumferential series on a surface thereof and against peripheral retaining structure of the disc, and further including a retaining means fixable to the surface and arranged for assisting in retaining the members at least axially on the surface when so fixed, the retaining means comprising a spider, the spider comprising an annulus and a series of radially projecting arms, **characterised in that:**
the spider comprises a series of cut-outs through the annulus such that the annulus is of reduced thickness in the region of each cut-out; and
the retaining means further comprises a series of wedge members shaped and arranged to fit in the cut-outs so as to abut a substantially circumferentially or substantially tangentially extending and radially inner part of each magnetisable member thereby to provide the axial retention.

It has been found that, in operation, larger magnets fixed to a rotor disc using a known technique, such as that disclosed in WO 02/056443 can become at least partly detached from the disc. Surprisingly, it has been realised that this is due to a tendency for the members to rotate about an axis tangential to the surface of the disc such that their radially inner ends lift above the surface in an axial direction, with respect to the axis of the disc. This is particularly the case with larger members. The present invention is advantageous in that, by abutting a circumferentially or tangentially extending and radially inner part of each member, such as a radially inner and end face, this tendency can be most easily resisted.

Secondary retaining means may be provided for fixing the magnetisable members to the surface. For example the magnetisable members may also be fixed to the surface by an adhesive.

The retaining means may also be arranged to abut the members so as to retain the magnetisable members tangentially. Tangential retention may be provided by the retaining means being arranged to abut substantially radially-extending sides of the magnetisable members.

Preferably the retaining means and the magnetisable members are arranged to have mutually abutting surfaces that are oblique to the surface of the disc. Some or all of the mutually abutting surfaces may extend substantially circumferentially, or substantially tangentially, such that the axial retention is provided by abutment therebetween. Preferably, the surface of each member that is a mutually abutting surface is a radially innermost end of the member. This is advantageous in urging each magnetisable member both axially against the surface of the disc and radially against the peripheral retaining structure of the disc, thereby providing both axial and radial retention of at least the radially innermost part of the member. In a preferred embodiment of this invention, the mutually abutting surfaces make an angle of between about 70 and 80 degrees with the surface of the disc. Most preferably, the angle is about 75 degrees.

At least some of the mutually-abutting surfaces may extend substantially radially, such that the radial retention, and additional axial retention, is provided by abutment therebetween.

The retaining means may be arranged such that it abuts a surface of each magnetisable member that is opposite to a surface thereof that is against the surface of the disc, the retaining means thereby providing the axial retention.

The retaining means may include supporting means and abutment means, the supporting means being for fixing to the surface of the disc and the abutment means for fixing to the supporting means and for abutting the magnetisable members. The abutment means may be of a stronger material that the supporting means. Preferably the abutment means is of a non-ferrous metal, such as aluminium and the supporting means is of a plastic material, such as nylon. Preferably the abutment means is arranged such that, when fixed to the supporting means, it presents a, or a respective, surface for the said oblique mutual abutment with the or each of the members.

The plurality of wedge members are preferably fitted to the supporting means such that fixing the supporting means to the disc results in each wedge member presenting a substantially tangential surface that is oblique to the surface of the disc to a respective one of the magnetisable members. Preferably the magnetisable members are arranged with a radially inner and cooperating substantially tangential surface that is oblique to the surface of the disc and that cooperates with the oblique surface of each wedge member to result in the axial retention of the member when the supporting means is fixed to the disc.

The abutment means may include another surface or surfaces, substantially opposite the first and for abutment against the supporting means or against radially inner structure of the disc. The other surface of the abutment means may also be oblique to the surface of the disc and such that fixing the abutment means to the supporting means, and/or the supporting means to the disc, causes the abutment means to be urged against the member. The supporting means or the radially inner structure of the disc may be provided with a cooperating surface or surfaces that are oblique to the surface of the disc and for cooperating with the other surface of the abutment means.

The spider is preferably for mounting coaxially with the disc such that each arm projects between and abuts each of a respective juxtaposed pair of the members, thereby providing the tangential retention. The plurality of wedge members is preferably for fitting to the annulus of the spider such that fixing the spider to the disc results in each wedge member presenting a substantially tangential surface that is oblique to the surface of the disc and to a respective one of the magnetisable members. Preferably the magnetisable members are arranged with a substantially tangential surface that is oblique to the surface of the disc and that cooperates with the oblique surface of each wedge member to result in the axial retention of the magnetisable member when the spider is fixed to the disc.

The magnetisable members are preferable rare earth magnets, such as those formed from neodymium-iron-boron.

Specific embodiments of this invention are now described by way of example only and with reference to the accompanying figures, in which:
Figure 1 is a sectional view through an alternator showing a plan view of a rotor disc of the alternator;
Figure 2 is sectional view though the alternator, the section being through a radial plane of the rotor disc;
Figure 3A is a side elevation of a magnet for fitting to the rotor disc;
Figure 3B is a plan view of the magnet;
Figure 4 is a perspective view of a spider for fitting to the rotor disc;
Figure 5A is a plan view of an insert for fitting to the spider; and
Figure 5B is a sectional view through the insert.

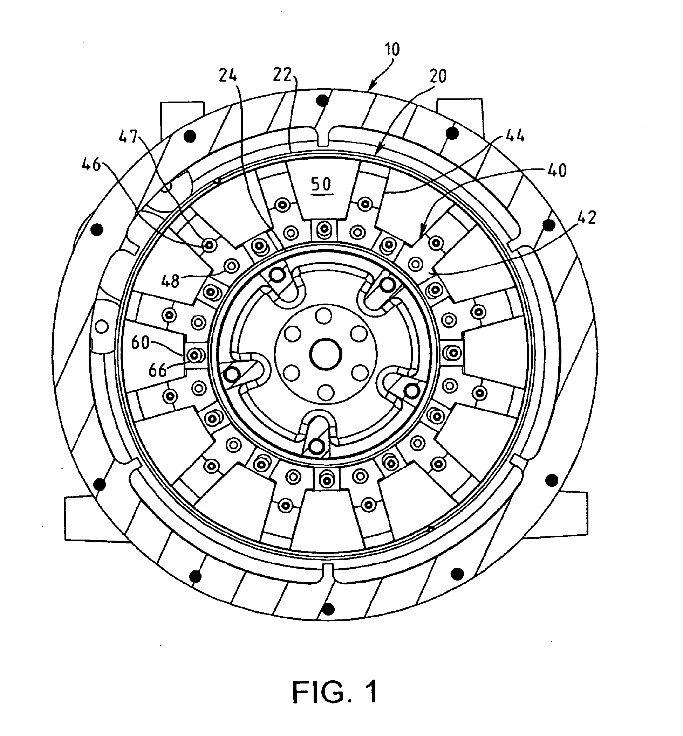

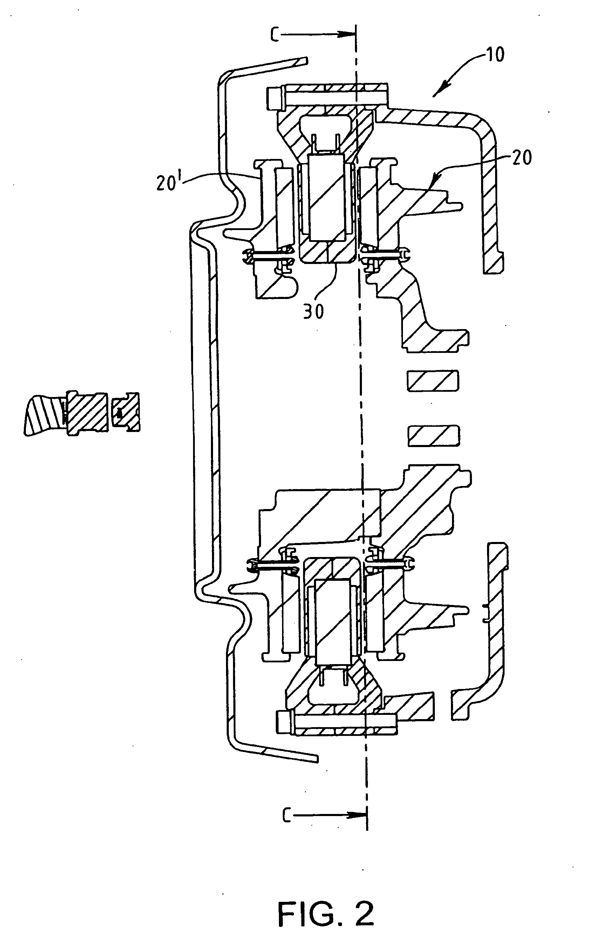

Figure 1 shows a rotor disc 20 of a permanent magnet, axial flux alternator 10. The alternator 10 is of the type that has a toroidal stator sandwiched between a pair of co-axial rotor discs, of which the rotor disc 20 is one. Figure 2 is a cross sectional view of the alternator 10 and shows the stator 30, the one rotor disc 20 and the other rotor disc 20'.

With reference to Figure 1, the rotor disc 20 is an annular disc formed of a ferrous material, such as electromagnetic steel. The disc 20 is formed with peripheral retaining structure in the form of a continuous peripheral lip 22 that projects from the one of its surfaces that is for placing adjacent the stator 30. The disc 20 is also formed with radially inner structure in the form of a continuous radially inner lip 24 that projects from the same surface of the disc 20.

As can also be seen from Figure 1, the rotor disc 20 includes twelve magnets 50 positioned on the surface of the disc 20, and a spider 40 fixed to that surface.

The magnets 50 are rare earth permanent magnets formed of neodymium-iron-boron. The magnets 50 are substantially trapezium-shaped plates, having a long side substantially parallel to a short side with two mutually-oblique sides extending therebetween. The long side is, however, shaped so as to be arcuate and of a radius that is substantially the same as that of the inner diameter of the peripheral lip 22. Thus, in plan-form, each magnet 50 resembles a sector, but with a triangular tip portion removed. The magnets 50 are circumferentially distributed about the disc 20 with a constant pitch angle and orientated such that each has its arcuate side adjacent the peripheral lip 22.

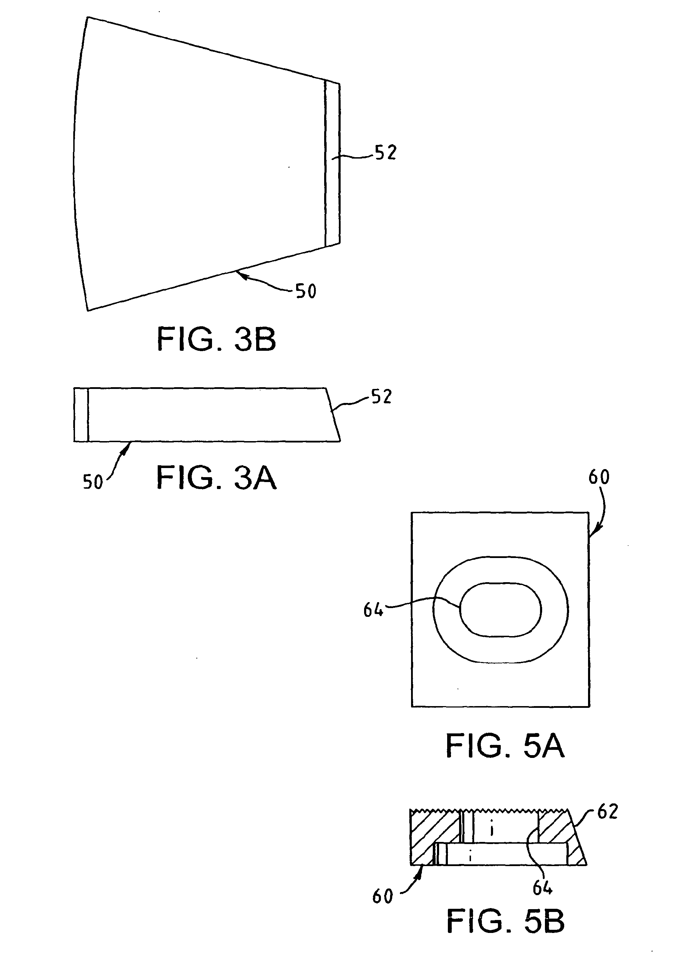

When positioned on the surface of the disc 20, all of the sides of each magnet 50 project perpendicularly from the surface, with the exception of the radially innermost side, shown at 52 on Figures 3A and 3B. With reference to these two figures, the radially innermost side 52, which extends tangentially when in position on the disc 20, is inclined to the perpendicular from the surface of the disc so as to be oblique thereto. The radially innermost side 52 forms an angle of 15 degrees with the perpendicular and such that the magnet face that is adjacent the disc surface projects further from the peripheral lip 22 than does the magnet face that is spaced from the surface. Thus, each magnet 50 has three sides which may be termed "perpendicular" and one side, the radially innermost side 52, which may be termed "oblique".

Each magnet is fixed in position on the surface of the disc 20 by an adhesive.

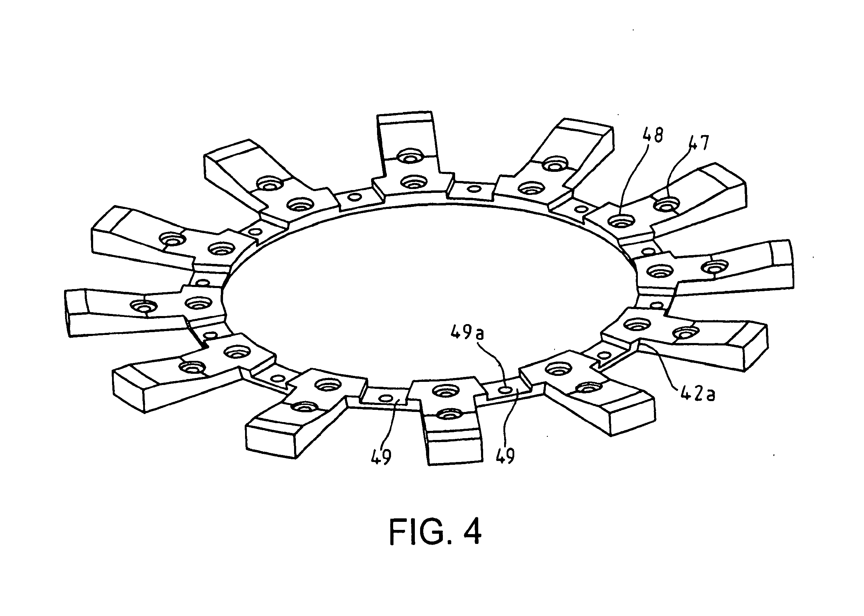

The spider 40 is for use in retaining the magnets 50 in position on the rotor disc 20. The spider 40 is formed from nylon and is shaped so as to have an inner annular portion 42, with a series of circumferentially-distributed arms 44 projecting radially outwards therefrom, as can be seen more clearly from figure 4. With reference to Figure 3, the spider 40 is mounted to the surface of the disc 20 such that the inner diameter of the annular portion 42 of the spider 40 lies around and adjacent the radially inner lip 24. The arms 44 of the spider are for interdigitating with the magnets 50 and so the spider 40 is orientated such that each juxtaposed pair of the magnets 50 have a respective arm 44 therebetween. The sides of each of the spider arms 44 are perpendicular to the surface of the disc 20 and the width of each arm 44 is such that it abuts the adjacent, perpendicular and generally radial side of each of the respective juxtaposed pair of magnets 50.

Figure 4 allows more of the detail of the shape of the spider 40 to be understood. With reference to Figure 4, the inner annulus 42 of the spider 40 has radially outer sides 42a that, in contrast to the sides of the arms 44, are not perpendicular to the surface of the disc 20 when the spider 40 is mounted thereon. Instead, the radially outer sides 42a are oblique to the surface so as to cooperate with and be in face-to-face abutment with the oblique radially inner sides 52 of the magnets 50. Thus, the radially outer sides 42a of the spider 40 also make an angle of 15 degrees with a perpendicular to the disc surface. The abutment is such that the magnets 50 are urged against the peripheral lip 22 of the disc 20.

The spider is fixed in position by the provision of a number of rivets, shown at 46 in Figure 1, each of which passes through a respective rivet hole, shown at 47 in Figures 1 and 4, formed through each arm 44 of the spider 40 and through a cooperating hole (not shown) formed through the rotor disc 20. The spider 40 also includes a series of air holes 48 formed through the annulus 42 thereof, each in-line with a respective one of the arms 44. Each of these air holes 48 is co-axial with a respective cooperating hole (not shown) in the rotor disc 20 and is for admitting cooling air therethrough during operation of the alternator 10.

With reference to Figure 4, the annulus 42 of the spider 40 also includes a series of cut-outs 49. Each cut-out 49 is a radial channel through the annulus 42, such that the annulus 42 is of reduced thickness in the region of each cut-out 49. Each cut-out 49 is formed into the surface of the spider 40 that is not for placing against the surface of the disc 20. A respective cut-out 49 is formed mid-way between each juxtaposed pair of the arms 44. A further rivet hole 49a is formed though the base of the channel that is defined by each cut-out 49, that is to say: through material of the annulus 42, in the region of each cut-out 49.

With reference to Figure 1, the disc 20 also includes a series of wedge members in the form of inserts 60. Each insert 60 is a block, formed from aluminium, that is shaped and arranged to be a sliding fit, in a radial direction, in one of the cut-outs 49. All of the sides of each insert 60 are at right angles to one another or parallel to one another, apart from one face 62 which is oblique. Each insert 60 is arranged such that, when fitted in a cut-out 49, the oblique face 62 can be positioned radially outwards, with respect to the annulus 42 of the spider 40. In such a position, the oblique face 49 of each insert 60 is a co-planar continuation of a respective oblique radially-outer side 42a of the annulus 42. Thus, the oblique side 62 of each insert 60 is also in face-to-face abutment with the oblique face 52 of a respective one of the magnets 50.

Each insert 60 includes a rivet-receiving fixing hole 64 for fixing the insert 60 to the annulus 42 of the spider 40 and to the rotor disc 20. An insert-retaining rivet, shown at 66 in Figure 1, is riveted through the fixing hole 64 of each insert 60 and through a respective one of the further holes 49a in the annulus 42 and through a respective cooperating hole formed through the rotor disc 20. With reference to Figures 5A and 5B, the fixing holes 64 are counter-sunk to accommodate the rivet head portions within external contours of the insert 60. The fixing holes 64, including the counter sunk portions thereof, are elongated in a direction that is radial with respect to the annulus 42 when the inserts 60 are fitted thereto. This is to allow some radial variation of the position of each insert 60 relative to the magnets 50, thereby ensuring that each insert 60 can be placed in abutment with its respective magnet 50, before that insert 60 is riveted into position on the annulus 42 and the rotor disc 20. As shown in Figure 5B, the underside of each insert 60, that is for contacting the annulus 42, is formed with grooves extending in a direction that is substantially tangential when the insert 60 is fitted to the annulus 42. The grooves are formed in a knurling operation. The provision of the grooves increases friction between the inserts 60 and the annulus 42, thereby promoting fixation of the former relative to the latter.

The abutment between two inserts 60 and their respective magnets 50, and the riveting of those two inserts 60 to the annulus 42 of the spider and the rotor disc 20 is shown in the section view of the alternator 10 of Figure 2.

In operation of the alternator 10, the rotor disc 20 is rotated at high speed. The magnets 50 are therefore subjected (from the frame of reference of the rotor disc) to a radially outwards centrifugal force during rotation, to tangential forces when speeding up and slowing down and to axial forces as a result of electromagnetic interaction with surrounding structure. Radial retention is provided by the peripheral lip 22 in reaction to the centrifugal force, tangential retention is provided by the arms 44 of the spider 40 in reaction to the tangential forces, and axial retention, at least of the radially innermost part of each magnet 50, is provided by the inserts 60, and specifically by the reaction of the oblique faces 62 thereof against the cooperating oblique sides 52 of the magnets 50. By axially retaining at least the radially innermost part of each magnet 50, the tendency of each magnet 50 to rotate about an axis tangential to the disc such that their radially innermost ends lift from the surface of the disc 20 is resisted. Thus, the magnets are retained in position during operation.

In a first alternative embodiment of this invention which is not illustrated, the spider 40 of the previously-described embodiment is modified. The modified spider is modified such that each cut-out therethrough forms a blind channel in the annulus that terminates in a radially inner wall. Each radially inner wall serves as an abutment against which the respective insert may abut when it abuts against the respective magnet. In other words, the insert acts as a wedge between the wall and the magnet.

In a second alternative embodiment of this invention which is also not illustrated, the spider is the same as that 40 described above with reference to the drawings, but the inserts are modified. Each modified insert is elongated in a radial direction and has a radially inner face that mirrors its radially outer face in being oblique to a perpendicular to the surface of disc. Each insert is arranged such that, when its radially outer face abuts the respective magnet, its radially inner face abuts the radially inner lip of the disc. Thus, and again, the inserts act as wedges; but this time they act as wedges between the radially inner lip and the magnets. It is envisaged that a radially outer surface of the radially inner lip may also be oblique to a perpendicular to the surface of the disc and so as to cooperate with the oblique and radially inner face of each modified insert.

## Claims

1. A rotor disc (20) for an electrical machine, the rotor disc including a series of magnetisable members (50) arranged in a circumferential series on a surface thereof and against peripheral retaining structure (22) of the disc, and further including a retaining means fixable to the surface and arranged for assisting in retaining the members at least axially on the surface when so fixed, the retaining means comprising a spider (40), the spider comprising an annulus (42) and a series of radially projecting arms (44), **characterised in that:**
the spider comprises a series of cut-outs (49) through the annulus (42) such that the annulus is of reduced thickness in the region of each cut-out; and
the retaining means further comprises a series of wedge members (60) shaped and arranged to fit in the cut-outs so as to abut a substantially circumferentially or substantially tangentially extending and radially inner part of each magnetisable member thereby to provide the axial retention.

2. A rotor disc according to claim 1, wherein the spider is arranged to abut the magnetisable members so as to retain the magnetisable members tangentially.

3. A rotor disc according to claim 2, wherein said tangential retention is provided by the spider being arranged to abut substantially radially-extending sides of the magnetisable members.

4. A rotor disc according to any preceding claim, wherein the retaining means and the magnetisable members are arranged to have mutually abutting surfaces that are oblique to the surface of the disc.

5. A rotor disc according to claim 4, wherein some or all of the mutually abutting surfaces extend substantially circumferentially, or substantially tangentially, such that the axial retention is provided by abutment therebetween.

6. A rotor disc according to claim 4 or claim 5, wherein the surface of each magnetisable member that is a mutually abutting surface is a radially innermost end of the magnetisable member.

7. A rotor disc according to any one of claims 4 to 6, wherein the mutually abutting surfaces make an angle of between about 70 and 80 degrees with the surface of the disc.

8. A rotor disc according to any one of claims 4 to 7, wherein at least some of the mutually-abutting surfaces extend substantially radially, such that the radial retention, and additional axial retention, is provided by abutment therebetween.

9. A rotor disc according to any preceding claim, wherein the retaining means is arranged so as to abut a surface of each magnetisable member that is opposite to a surface thereof that is against the surface of the disc, the retaining means thereby providing the axial retention.

10. A rotor disc according to any of the preceding claims, wherein the wedge members are of a stronger material that the spider.

11. A rotor disc assembly according to any of the preceding claims, wherein each wedge member presents a substantially tangential surface that is oblique to the surface of the disc and to a respective one of the magnetisable members.

12. A rotor disc assembly according to claim 11, wherein the magnetisable members are arranged with a radially inner and cooperating substantially tangential surface that is oblique to the surface of the disc and that cooperates with the oblique surface of each wedge member to result in the axial retention of the magnetisable members when the spider is fixed to the disc.

13. A rotor disc assembly according to claim 11 or 12 wherein each wedge member includes another surface or surfaces, substantially opposite the first said surface of each wedge member, the other surface or surfaces being for abutment against the spider or against radially inner structure of the disc.

14. A rotor disc according to claim 13 wherein the spider or the radially inner structure of the disc is provided with a cooperating surface or surfaces that are oblique to the surface of the disc and for cooperating with the said other surface of the wedge members.

15. A rotor disc according to any of the preceding claims wherein the spider is for mounting coaxially with the disc such that each arm projects between and abuts each of a respective juxtaposed pair of the magnetisable members, thereby providing the tangential retention.

## Patentansprüche

1. Rotorscheibe (20) für eine elektrische Maschine, wobei die Rotorscheibe eine Reihe magnetisierbarer Elemente (50) umfasst, die in einer um den Umfang angeordneten Reihe auf einer Fläche davon und gegen eine periphere Haltestruktur (22) der Scheibe angeordnet sind, und überdies ein Haltemittel umfasst, das an der Fläche fixierbar ist und so angeordnet ist, dass es das Halten der Elemente zumindest axial auf der Fläche unterstützt, wenn so fixiert, wobei das Haltemittel einen Stern (40) umfasst, wobei der Stern einen Ring (42) und eine Reihe radial hervor stehender Arme (44) umfasst, **dadurch gekennzeichnet, dass:**
der Stern eine Reihe Aussparungen (49) entlang dem Ring (42) umfasst, so dass der Ring eine verminderte Stärke in dem Bereich jeder Aussparung aufweist; und
das Haltemittel überdies eine Reihe Keilelemente (60) umfasst, die so geformt und angeordnet sind, dass sie in die Aussparungen passen, so dass sie an einem im Wesentlichen sich in Umfangsrichtung oder im Wesentlichen tangential und dabei radial erstreckenden Teil jedes magnetisierbaren Elements anliegen, um den axialen Halt bereitzustellen.

2. Rotorscheibe nach Anspruch 1, wobei der Stern angeordnet ist, an den magnetisierbaren Elementen anzuliegen, so dass die magnetisierbaren Elemente tangential gehalten werden.

3. Rotorscheibe nach Anspruch 2, wobei der tangentiale Halt dadurch bereitgestellt wird, dass der Stern so angeordnet ist, dass er im Wesentlichen an den sich radial erstreckenden Seiten der magnetisierbaren Elemente anliegt.

4. Rotorscheibe nach einem vorhergehenden Anspruch, wobei das Haltemittel und die magnetisierbaren Elemente angeordnet sind, gegenseitig aneinander anliegende Flächen ausweise, die schräg zur Fläche der Scheibe sind.

5. Rotorscheibe nach Anspruch 4, wobei sich einige oder alle der gegenseitig aneinander anliegenden Flächen im Wesentlichen um den Umfang oder im Wesentlichen tangential erstrecken, so dass der axiale Halt durch die Anlage dazwischen bereitgestellt wird.

6. Rotorscheibe nach Anspruch 4 oder Anspruch 5, wobei die Fläche jedes magnetisierbaren Elements, die eine gegenseitig anliegende Fläche ist, ein radial innerstes Ende des magnetisierbaren Elements ist.

7. Rotorscheibe nach einem der Ansprüche 4 bis 6, wobei die gegenseitig anliegenden Flächen einen Winkel von ungefähr 70 bis 80 Grad mit der Fläche der Scheibe bilden.

8. Rotorscheibe nach einem der Ansprüche 4 bis 7, wobei sich mindestens einige der gegenseitig anliegenden Flächen im Wesentlichen radial erstrecken, so dass der radiale Halt und zusätzlich axialer Halt durch die Anlage dazwischen bereitgestellt wird.

9. Rotorscheibe nach einem der vorhergehenden Anspruch, wobei das Haltemittel so angeordnet ist, dass es an einer Fläche jedes magnetisierbaren Elements anliegt, das einer Fläche davon gegenüberliegt, die an der Fläche der Scheibe anliegt, wobei das Haltemittel dadurch den axialen Halt bereitstellt.

10. Rotorscheibe nach einem der vorhergehenden Ansprüche, wobei die Keilelemente aus einem stärkeren Werkstoff hergestellt sind als der Stern.

11. Rotorscheibenbaugruppe nach einem der vorhergehenden Ansprüche, wobei jedes Keilelement eine im Wesentlichen tangentiale Fläche darstellt, die schräg zur Fläche der Scheibe und zu jeweils einem der magnetisierbaren Elemente verläuft.

12. Rotorscheibenbaugruppe nach Anspruch 11, wobei die magrietisierbaren Elemente mit einer radial inneren und zusammenwirkenden im Wesentlichen tangentialen Fläche angeordnet sind, die schräg zur Fläche der Scheibe verläuft und die mit der schrägen Fläche jedes Keilelements zusammenwirkt, um zu dem axialen Halt der magnetisierbaren Elemente zu führen, wenn der Stern auf der Scheibe fixiert ist.

13. Rotorscheibenbaugruppe nach Anspruch 11 oder 12, wobei jedes Keilelement eine weitere Fläche oder Flächen umfasst, die im Wesentlichen gegenüberliegend zur ersten Fläche jedes Keilelements ist/sind, wobei die andere Fläche oder Flächen zum Anliegen an dem Stern oder an der radial inneren Struktur der Scheibe dienen.

14. Rotorscheibe nach Anspruch 13, wobei der Stern oder die radial innere Struktur der Scheibe mit einer zusammenwirkenden Fläche oder Flächen versehen ist, die schräg zur Fläche der Scheibe und zum Zusammenwirken mit der anderen Fläche der Keilelemente dient/dienen.

15. Rotorscheibe nach einem der vorhergehenden Ansprüche, wobei der Stern zur koaxialen Montage mit der Scheibe dient, so dass jeder Arm zwischen jeweils einem benachbarten Paar magnetisierbarer Elemente hervor steht und an ihm anliegt, und dabei den tangentialen Halt bereitstellt.

## Revendications

1. Disque de rotor (20) pour une machine électrique, le disque de rotor comprenant une série d'éléments magnétisables (50) agencés dans une série circonférentielle sur sa surface et contre la structure de retenue périphérique (22) du disque, et comprenant en outre des moyens de retenue pouvant être fixés sur la surface et agencés pour aider à retenir les éléments au moins de manière axiale sur la surface lorsqu'ils sont ainsi fixés, les moyens de retenue comprenant un croisillon (40), le croisillon comprenant un espace annulaire (42) et une série de bras (44) radialement en saillie, **caractérisé en ce que :**
le croisillon comprend une série de découpes (49) à travers l'espace annulaire (42) de sorte que l'espace annulaire a une épaisseur réduite dans la région de chaque découpe ; et
les moyens de retenue comprennent en outre une série d'éléments formant cale (60) formés et agencés pour s'adapter dans les découpes afin de venir en butée contre une partie radialement interne et s'étendant de manière sensiblement tangentielle ou sensiblement circonférentielle de chaque élément magnétisable pour fournir ainsi la retenue axiale.

2. Disque de rotor selon la revendication 1, dans lequel le croisillon est agencé pour venir en butée contre les éléments magnétisables afin de retenir les éléments magnétisables de manière tangentielle.

3. Disque de rotor selon la revendication 2, dans lequel ladite retenue tangentielle est fournie par le croisillon qui est agencé pour venir en butée sur les côtés s'étendant de manière sensiblement radiale des éléments magnétisables.

4. Disque de rotor selon l'une quelconque des revendications précédentes, dans lequel les moyens de retenue et les éléments magnétisables sont agencés pour avoir des surfaces mutuellement en butée qui sont obliques par rapport à la surface du disque.

5. Disque de rotor selon la revendication 4, dans lequel certaines ou toutes les surfaces venant mutuellement en butée, s'étendent de manière sensiblement circonférentielle ou sensiblement tangentielle, de sorte que la retenue axiale est fournie par la butée entre elles.

6. Disque de rotor selon la revendication 4 ou la revendication 5, dans lequel la surface de chaque élément magnétisable qui est une surface venant mutuellement en butée, est l'extrémité située radialement le plus à l'intérieur de l'élément magnétisable.

7. Disque de rotor selon l'une quelconque des revendications 4 à 6, dans lequel les surfaces venant mutuellement en butée font un angle compris entre environ 70 et 80 degrés avec la surface du disque.

8. Disque de rotor selon l'une quelconque des revendications 4 à 7, dans lequel au moins certaines des surfaces venant mutuellement en butée s'étendent de manière sensiblement radiale, de sorte que la retenue radiale et la retenue axiale supplémentaires sont fournies par la butée entre elles.

9. Disque de rotor selon l'une quelconque des revendications précédentes, dans lequel les moyens de retenue sont agencés afin de venir en butée contre une surface de chaque élément magnétisable qui est opposée à sa surface qui est contre la surface de disque, les moyens de retenue fournissant ainsi la retenue axiale.

10. Disque de rotor selon l'une quelconque des revendications précédentes, dans lequel les éléments formant cale sont réalisés avec un matériau plus robuste que le croisillon.

11. Ensemble de disque de rotor selon l'une quelconque des revendications précédentes, dans lequel chaque élément formant cale présente une surface sensiblement tangentielle qui est oblique par rapport à la surface du disque et par rapport à un élément respectif des éléments magnétisables.

12. Ensemble de disque de rotor selon la revendication 11, dans lequel les éléments magnétisables sont agencés avec une surface sensiblement tangentiellle coopérante et radialement interne qui est oblique par rapport à la surface du disque et qui coopère avec la surface oblique de chaque élément formant cale pour se traduire par la retenue axiale des éléments magnétisables lorsque le croisillon est fixé sur le disque.

13. Ensemble de disque de rotor selon la revendication 11 ou 12, dans lequel chaque élément formant cale comprend une autre surface ou d'autres surfaces, sensiblement opposées à ladite première surface de chaque élément formant cale, l'autre surface ou les autres surfaces étant prévues pour la butée contre le croisillon let contre la structure radialement interne du disque.

14. Disque de rotor selon la revendication 13, dans lequel le croisillon ou la structure radialement interne du disque est prévu avec une surface ou des surfaces coopérantes qui sont obliques par rapport à la surface du disque et pour coopérer avec ladite autre surface des éléments formant cale.

15. Disque de rotor selon l'une quelconque des revendications précédentes, dans lequel le croisillon est prévu pour être montré de manière coaxiale avec le disque de sorte que chaque bras fait saillie entre et vient en butée contre chaque élément d'une paire juxtaposée respective d'éléments magnétisables, fournissant ainsi la retenue tangentielle.
